# EUROPÄISCHE PATENTSCHRIFT

(11) **EP 3 087 870 B1**
(45) Veröffentlichungstag und Bekanntmachung des Hinweises auf die Patenterteilung: **13.06.2018**
(21) Anmeldenummer: 16000844.7
(22) Anmeldetag: 14.04.2016
(51) Int. Cl.: A47C 23/00

(54) **FEDERBAUELEMENT, FEDERELEMENT UND UNTERFEDERUNG**
SPRING CONSTRUCTION ELEMENT, SPRING ELEMENT AND SUPPORTING SPRING SYSTEM
COMPOSANT A RESSORT, ELEMENT A RESSORT ET SOMMIER

(30) Priorität: 30.04.2015 DE 202015102183 U
(43) Veröffentlichungstag der Anmeldung: 02.11.2016
(73) Patentinhaber: Hartmann, Siegbert, 32584 Löhne (DE)
(72) Erfinder: Hartmann, Siegbert, 32584 Löhne (DE)
(74) Vertreter: Rolf, Gudrun

(56) Entgegenhaltungen:
- WO-A1-01/15572
- WO-A1-01/50923
- DE-U1-202006 018 923

## Beschreibung

Die Erfindung betrifft ein Federbauelement eines Federelements zur Unterfederung von Sitz- oder Liegeflächen, daraus aufgebaute Federelemente und aus diesen zusammengesetzte Unterfederungen

Es sind Federkörper bekannt, EP 1 211 969 B1 aus WO 01/15572A1, die in einer Einzelsegmentunterfederung eines Sitz- oder Liegemöbels oder einer Matratze eingesetzt werden und jeweils einen oberen und einen unteren Auflagerteller sowie einen Federkörper aufweisen, der aus Federungsarmen besteht, die radial um eine Mittellängsachse herum aus einer Ebene konvex nach oben umgebogen und dort in einer zweiten Ebene eingerastet ausgeführt sind, wozu eine Vielzahl solcher Federungsarme mit ihren endseitigen Rasten in Rastenaufnahmen verriegelt werden müssen, was sehr arbeits- und kostenintensiv ist, ebenso wie bei diesen bekannten Federkörpern nur geringe Variationsmöglichkeiten in der Federhärte oder der Federhöhe verwirklicht werden können.

Ein weiterer bekannter Federkörper, WO 01/50923 A1, weist ebenfalls einen Federkörper auf, der aus einzelnen, sich radial erstreckenden Federungsarmen besteht, die um eine Mittellängsachse herum aus einer horizontalen Ebene konvex nach oben und unten umgebogen und dort an einem Fußteil und einer Auflagerfläche für Matratzen eingerastet ausgeführt sind, sodass dieser Federkörper genau die gleichen vorgenannten Nachteile aufweist.

Aufgabe der Erfindung ist es, ein Federbauelement zur Verfügung zu stellen, welches kostengünstig und einfach herzustellen ist und zur Konstruktion von unterschiedlich hohen und/ oder steifen Federelementen genutzt werden kann und mit denen Unterfederungen von Sitz- oder Liegeflächen zur Verfügung gestellt werden können, die möglichst einfach und problemlos an vorhandene Räume angepasst und/ oder die unterschiedliche Konturen einer Sitz- oder Liegefläche erzeugen und/ oder unterschiedlich Höhen ausgleichen können.

Die Lösung dieser Aufgabe ergibt sich insbesondere daraus, dass das Federbauelement aus dauerelastischem Kunststoff gefertigt ist, mit einem flächigen, rechtwinklig zu einer vertikalen Mittelsenkrechten angeordneten Koppelsteg, von dessen beiden entgegengesetzten Enden sich jeweils zwei elastische Federbögen in entgegengesetzter Richtung, etwa nach oben und unten, erstrecken, die an ihren Enden jeweils mit Rasten versehen sind, die mit Rasten anderer Federbauteile korrespondieren könnend ausgebildet sind.

Ein solches Federbauelement lässt sich alleine, bevorzugterweise allerdings zu zweit zwischen zwei Auflagerteller einsetzten, oder auch ein weiteres oder auch mehrere Federbauelemente durch Zwischenschalten eines oder mehrere Adapter zu einem Federelement mit beliebiger Höhe zusammensetzen, wobei die Materialstärke der Federbögen und deren räumliche Ausgestaltung, ebenso wie die Auswahl der verwendeten Kunststoffe oder die Ergänzung mit weiteren Puffern die Federraten der dadurch erzeugten Federelemente wahlfrei beeinflussen können.

Entsprechend der Erfindung sind die Federbögen jeweils im Bereich ihrer konvexen Scheitelpunkte konkav nach innen gefaltet und bilden dort jeweils ein Federmaul, wobei solche Federmäuler vorteilhafte Federeigenschaften und Materialbeanspruchungen aufweisen und die sich etwa bei einer Gesamteinfederung eines belasteten Federbauelementes zunächst öffnen und sich erst bei einer sehr hohen Gewichtsbelastung eines Federbauelementes schließen.

Weitere vorteilhafte Ausgestaltungen des Gegenstandes der Erfindung ergeben sich mit und in Kombination aus den nachfolgenden Unteransprüchen.

Bei einer vorteilhaften Ausgestaltung der Erfindung weist der Koppelsteg von der Mittelsenkrechten durch das Federbauelement seitlich versetzt einen Rastnocken und eine ebenfalls davon seitlich versetzte Nockenaufnahme auf, sodass ein zweites Federbauelement in um 180° umgekehrter Position winklig zum ersten Federbauelement damit verrastet werden kann, wobei in dieser Position der Rastnocken des einen Federbauelements in die Nockenaufnahme des jeweils anderen Bauelements eingreift und umgekehrt.

Dieser Koppelsteg erlaubt die feste und werkzeuglose sowie verdrehfeste Verbindung zweier Federbauelemente, die das Grundgerüst für vielerlei weitere Abwandlungen zur Verwirklichung der unterschiedlichsten Federelemente und damit erzeugbaren Unterfederungen bilden.

Mit einem zweiten Federbauteil aus einem Auflagerteller, welcher mit den Rasten der Federbauelemente korrespondierende Rasten aufweist, lässt sich beispielsweise ein erstes Federelement bilden, welches etwa in eine Matratze eingesetzt werden oder selbstständig als Einzelfederelement dienen kann, wobei auch denkbar ist, dass der zweite Auflagerteller durch ein Fußteil mit einer Verrastungsvorrichtung ersetzt ist, um das Federelement auf einem Längs- oder Querholm eines Sitz- oder Liegemöbels oder auf einer ebenen Fläche eines solchen zu befestigen.

Entsprechend einer weiteren denkbaren Ausführungsform der Erfindung lassen sich mit einem dritten Federbauteil, welches als Adapter ausgebildet ist, der ebenfalls mit den Rasten der Federbauelemente korrespondierende Rasten aufweist, die allerdings so angeordnet sind, dass sie auf zwei entgegengesetzten Seiten des Adapters mit den Rasten von mehreren Federbauelementen korrespondieren, aus vier solcher Federbauteile, zwei Auflagerdeckeln und einem Adapter ein zweites Federelement aufbauen, welches zweietagig eine etwa gegenüber dem ersten Federelement verdoppelte Bauhöhe aufweist, jedenfalls dann, wenn identische Federbauelemente dazu verwandt wurden, die jedoch auch in ihrer Höhe beliebig ausgeführt sein können, was die Möglichkeit zur Erzeugung unterschiedlich hoher Federelemente weiter drastisch steigert.

Ein weiteres Federbauteil kann aus einem Puffer bestehen, welcher in dem Bauraum zwischen einem Kopplungssteg und zwei sich in eine Richtung erstreckende Federbögen einsetzbar ist, sodass sich beispielsweise aus zwei Federbauelementen, einem oder zwei Puffern und zwei Auflagertellern ein drittes Federelement zusammenbauen lässt, welches gegenüber dem ersten Federelement eine viel steifere Federrate aufweist, jedenfalls für den Fall, dass identische Federbauelemente verwandt wurden.

Eine weitere vorteilhafte Variation ergibt sich dadurch, dass die Puffer sowohl hohl und offen, als auch geschlossen oder auch massiv und aus unterschiedlich elastischen Kunststoffmaterialen und Materialstärken hergestellt sein können.

Mit diesen vorgenannten Federbauelementen lassen sich also durch eine Kombination des ersten, des zweiten und mindestens des dritten oder vierten Bauelements ein- oder mehretagige Variationen in den unterschiedlichsten Höhen und Federstärken verwirklichen, sodass sich daraus vorteilhafte Unterfederungen von Sitz- oder Liegeflächen erzeugen lassen, die entweder unterschiedliche Höhen ausgleichen und/ oder unterschiedliche Höhenlagen erzeugen können, ebenso wie an Positionen einer Sitz- oder Liegefläche, die besonders tiefe Einfederungen erfordern, mehrstöckige Federelemente vorgesehen werden können und an Positionen, die eine nur geringe Nachgiebigkeit aufweisen sollen, harte einstöckige Federelemente mit einem oder mehreren zusätzlichen Puffern zur Anwendung kommen können.

Nachfolgend sind einige Federbauelemente und daraus gefertigte Federelemente anhand von Zeichnungen näher beschrieben. Es zeigen:
- Fig. 1: ein Federbauelement in räumlicher Ansicht von schräg oben,
- Fig. 2: das Federbauelement gemäß Fig. 1 in einer Seitenansicht,
- Fig. 3: eine Explosionsdarstellung eines ersten Federelementes aus zwei Federbauelementen gemäß Fig. 1 und zwei Auflagerdeckeln,
- Fig. 4: das Federelement gemäß Fig. 3 in zusammengebautem Zustand,
- Fig. 5: eine Explosionsdarstellung eines zweietagigen Federelements mit einem zwischengeschalteten Adapter in räumlicher Ansicht,
- Fig. 6: das Federelement gemäß Fig. 5 in einem Zusammenbauzustand in einer Seitenansicht,
- Fig. 7: eine räumliche Ansicht eines dritten Federelementes gemäß dem der Fig. 4 mit zwei eingesetzten Puffern, und
- Fig. 8: eine Seitenansicht des Federelementes gemäß Fig. 7.

Das Federbauelement 1 besteht aus einem dauerelastischem Kunststoff und weist einen Koppelsteg 2 auf, der flach ausgebildet ist und sich rechtwinklig zu einer vertikalen Mittelsenkrechten 7 durch das Federbauelement 1 erstreckt, von dessen beiden entgegengesetzten Enden sich jeweils zwei elastische Federbögen 3 in entgegengesetzter Richtung nach oben und unten zurück in Richtung auf die Mittelsenkrechte 7 erstrecken, die an ihren Enden mit Rasten 4 versehen sind, die mit Rasten 5 anderer Federbauteile 10, 12 korrespondierend ausgebildet sind. Die Federbögen 3 weisen jeweils in ihren zur Seite gerichteten konvexen Scheitelpunkten konkav nach innen gefaltete Abschnitte auf, die jeweils dort ein Federmaul 6 bilden.

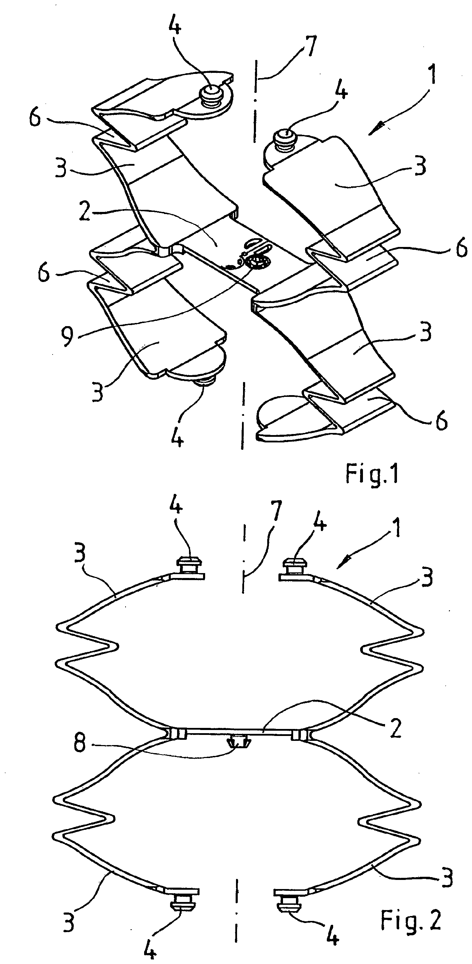

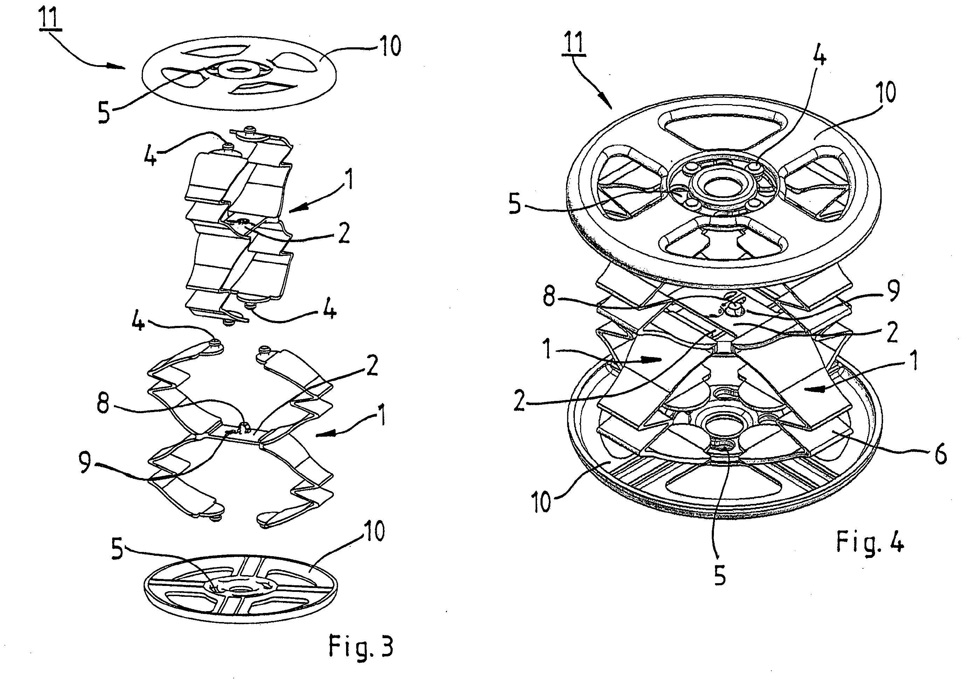

Der Koppelsteg 2 ist dabei unterhalb einer quer zur Mittelsenkrechten 7 verlaufenden Querachse angeordnet, sodass die beiden Koppelstege 2 zweier um 180° gedrehte Federbauelemente 1 diese Querachse beidseitig umschließen. Der Koppelsteg 2 weist seitlich von der Mittelsenkrechten 7 durch das Federbauelement 1 jeweils seitlich versetzte Rastnocken 8 und Rastnockenaufnahmen 9 auf, sodass zwei der in den Fig. 1 und 2 dargestellten Federbauelemente 1 bei in um 180° umgedrehter Position eines der beiden Federbauelemente 1 winklig miteinander verrastet werden können, in der jeweils ein Rastnocken 8 des einen Federbauelementes 1 in die Nockenaufnahme 9 des jeweils anderen Federbauelements 1 eingreift. Zusammen mit zwei weiteren Federbauteilen, die als Auflagerteller 10 ausgebildet sind, lässt sich aus den beiden Federbauteilen 1 ein erstes Federelement 11 konstruieren, wie es in Fig. 3 als Explosionsdarstellung und in Fig. 4 zusammengebaut dargestellt ist.

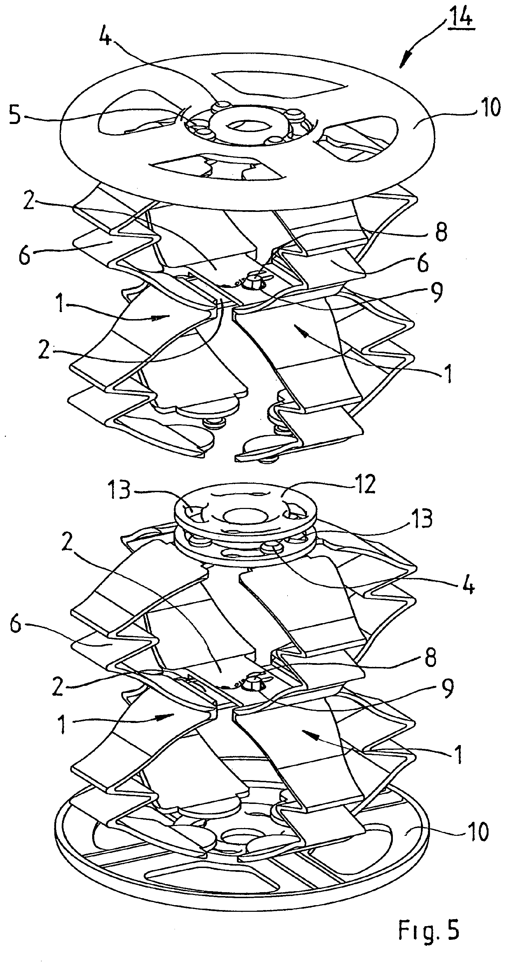

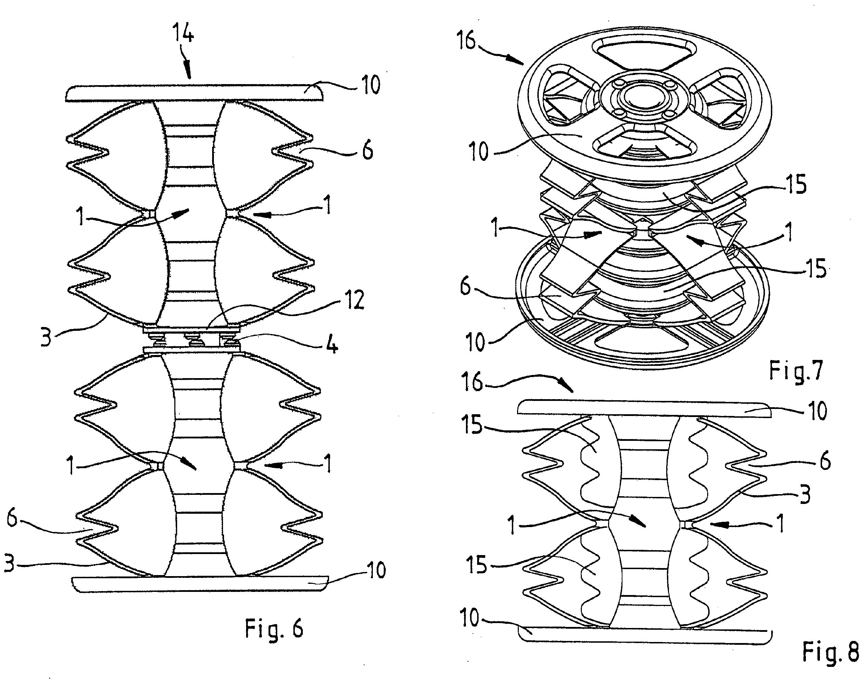

Mittels eines dritten Federbauteils, welches aus einem Adapter 12 besteht, welcher mit den Rasten 4 der Federbauelemente 1 korrespondierende Rasten 13 auf einer Ober- und einer Unterseite aufweist, lassen sich auf beiden entgegengesetzten Seiten des Adapters 12 jeweils zwei Federbauelemente 1 verrasten, wodurch insgesamt aus vier Federbauteilen 1, zwei Auflagerdeckeln 10 und einem Adapter 12 ein zweites Federelement 14 aufgebaut ist, welches zweietagig eine etwa verdoppelte Bauhöhe gegenüber dem ersten Federelement 11 aufweist, wie dies aus den Figuren 5 und 6 auch hervorgeht.

Mit einem vierten Federbauteil, welches aus einem Puffer 15 besteht, der in den Bauraum zwischen einem Koppelsteg 2 und zwei sich in eine Richtung erstreckenden Federbögen 3 eines Bauelementes 1 und etwa einen Auflagerdeckel 10 einsetzbar ist, lässt sich ein drittes Federelement 16 zur Verfügung stellen, wie dies in den Figuren 7 und 8 gezeigt ist, wobei dieses jeweils mit zwei Puffern 15 ausgestattet ist und so eine sehr viel steifere Federrate aufweist als das erste Federelement 11.

Zeichnerisch nicht dargestellt sind die vielen weiteren möglichen Bauvarianten, die mit dem Federbauelement 1 und den dazugehörigen weiteren Federbauelementen 10, 12, 15 erzeugbar sind, ebenso wie keine daraus hergestellten Unterfederungen dargestellt sind, die unterschiedliche Höhen aufweisen können und/ oder unterschiedliche Höhen ausgleichen können oder die unterschiedlich hohe Federwege aufweisen, um beispielsweise an Positionen einer Unterfederung, die eine Möglichkeit einer tiefen Einfederung zur Verfügung stellen sollen, angeordnet sind, ebenso wenig wie eine Unterfederung dargestellt ist mit Federelementen, die an anderen Positionen eine besonders harte Unterstützung erfordern und dort mit einstöckigen Federelementen mit einem oder mehreren Puffern 15 ausgestattet sind.

## Patentansprüche

1. Federbauelement aus dauerelastischem Kunststoff, wobei es einen rechtwinklig zu seiner vertikalen Mittelsenkrechten (7) flachen Koppelsteg (2) aufweist, von dessen beiden entgegengesetzten Enden sich jeweils zwei elastische Federbögen (3) in entgegengesetzter Richtung nach außen und zurück in Richtung der Mittelsenkrechten (7) erstrecken, die an ihren Enden mit Rasten (4) versehen sind, die mit Rasten (5) anderer Federbauteile korrespondieren könnend ausgebildet sind, **dadurch gekennzeichnet, dass** die Federbögen (3) jeweils im zur Seite gerichteten konvexen Scheitelpunkt konkav nach innen gefaltet sind und dort jeweils ein Federmaul (6) bilden.

2. Federbauelement nach einem der vorgenannten Ansprüche, **dadurch gekennzeichnet, dass** der Koppelsteg (2) von der Mittelsenkrechten (7) durch das Federbauelement (1) jeweils seitlich versetzt einen Rastnocken (8) und eine Nockenaufnahme (9) aufweist und zwei Federbauelemente (1) in um 180° umgedrehter Position winklig miteinander verrastbar ausgebildet sind, in der jeweils ein Rastnocken (8) des einen Federbauelements (1) in die Nockenaufnahme (9) des jeweils anderen Federbauelements (1) eingreift.

3. Federbauelement nach einem der vorgenannten Ansprüche, **dadurch gekennzeichnet, dass** ein zweites Federbauteil aus einem Auflagerteller (10) besteht, welcher mit den Rasten (4) des Federbauelementes (1) korrespondierende Rasten (5) aufweist und dass aus zwei Federbauelementen (1) und zwei Auflagertellern (10) ein erstes separates Federelement (11) gebildet ist.

4. Federbauelement nach einem der vorgenannten Ansprüche, **dadurch gekennzeichnet, dass** ein drittes Federbauteil aus einem Adapter (12) besteht, welcher mit den Rasten (4) der Federbauelemente (1) korrespondierende Rasten (13) aufweist, die so angeordnet sind, dass sie auf zwei entgegengesetzten Seiten des Adapters (12) mit den Rasten (4) von mehreren Bauelementen (1) korrespondieren und dass aus vier Federbauteilen (1), zwei Auflagerdeckeln (10) und einem Adapter (12) ein zweites Federelement (14) gebildet ist, welches zweietagig eine verdoppelte Bauhöhe gegenüber dem ersten Federelement (11) aufweist.

5. Federbauelement nach einem der vorgenannten Ansprüche, **dadurch gekennzeichnet, dass** ein viertes Federbauteil aus einem Puffer (15) besteht, welcher in den Bauraum zwischen einem Koppelsteg (2) und zwei sich in eine Richtung erstreckende Federbögen (3) einsetzbar ist und dass aus zwei Federbauelementen (1), einem oder zwei Puffern (15) und zwei Auflagertellern (10) ein drittes Federelement (16) gebildet ist, welches gegenüber dem ersten Federelement (11) bei gleicher Ausgangshöhe eine steifere Federrate aufweist.

6. Federbauelement nach Anspruch 5, **dadurch gekennzeichnet, dass** die Puffer (15) hohl und offen oder geschlossen oder massiv aus einem elastischem Kunststoffmaterial oder aus unterschiedlichen Kunststoff-materialien und/ oder anderen elastischen Materialien in gleichen oder unterschiedlichen Wandstärken ausgebildet sind.

7. Federbauelement nach einem der vorgenannten Ansprüche, **dadurch gekennzeichnet, dass** aus mehreren von diesem, dem zweiten und mindestens dem dritten oder vierten Bauelement ein oder mehretagige Variationen von weiteren Federelementen in unterschiedlichen Höhen und unterschiedlichen Federhärten erzeugt sind.

8. Federelement nach Anspruch 3, **dadurch gekennzeichnet, dass** ein erstes Federelement (11) aus zwei Federbauelementen (1) und zwei Auflagertellern (10) gebildet ist.

9. Federelement nach Anspruch 4, **dadurch gekennzeichnet, dass** ein zweites Federelement (14) aus vier Federbauteilen (1), zwei Auflagerdeckeln (10) und einem Adapter (12) gebildet ist.

10. Federelement nach Anspruch 5, **dadurch gekennzeichnet, dass** ein drittes Federelement (16) aus zwei Federbauelementen (1), einem oder zwei Puffern (15) und zwei Auflagertellern (10) gebildet ist.

11. Federelement nach Anspruch 7, **dadurch gekennzeichnet, dass** vierte und weitere Federelemente mehretagig in unterschiedlichen Höhen und mit unterschiedlichen Federraten aus den Federbauteilen (1;10;12;15) aufgebaut sind.

12. Unterfederung aus Federelementen der Ansprüche 8, 9, 10 und/ oder 11, aus Bauelementen nach den Ansprüchen 1 bist 7, **dadurch gekennzeichnet, dass** die Unterfederung in unterschiedlichen Höhen und/ oder unterschiedliche Höhen ausgleichend daraus gebildet ist.

13. Unterfederung nach Anspruch 12, **dadurch gekennzeichnet, dass** an Positionen einer Sitz- oder Liegefläche, die weiche tiefe Einfederungen erfordern, mehrstöckige Federelemente (11) vorgesehen sind.

14. Unterfederung nach Anspruch 12, **dadurch gekennzeichnet, dass** an Positionen einer Sitz- oder Liegefläche, die eine harte Unterstützung erfordern, Federelemente (16) mit einem oder mehreren Puffern (15) angeordnet sind.

## Claims

1. Spring construction element composed of permanently elastic plastic, wherein said element has a flat coupling web (2) at a right angle to its vertical perpendicular bisector (7), from the two opposite ends of which coupling web in each case two elastic spring bows (3) extend outward in opposite directions and back in the direction of the perpendicular bisector (7) and are provided at their ends with catches (4) which are designed so as to be able to correspond with catches (5) of other spring components, **characterized in that** the spring bows (3) are in each case concavely folded inwards at the convex apex directed towards the side and in each case form a spring jaw (6) there.

2. Spring construction element according to one of the preceding claims, **characterized in that** the coupling web (2) has a catch stud (8) and a stud receptacle (9), in each case offset laterally from the perpendicular bisector (7) through the spring construction element (1), and two spring construction elements (1) are designed such that they can be latched angularly with one another in a position in which they are turned over through 180° and in which in each case a catch stud (8) of the one spring construction element (1) engages in the catch receptacle (9) of the respective other spring construction element (1).

3. Spring construction element according to one of the preceding claims, **characterized in that** a second spring component consists of a support disc (10) which has catches (5) which correspond with the catches (4) of the spring construction element (1), and **in that** a first separate spring element (11) is formed from two spring construction elements (1) and two support discs (10).

4. Spring construction element according to one of the preceding claims, **characterized in that** a third spring component consists of an adapter (12) which has catches (13) which correspond with the catches (4) of the spring construction elements (1) and which are arranged such that they correspond on two opposite sides of the adapter (12) with the catches (4) of a plurality of construction elements (1), and **in that** a second spring element (14) is formed from four spring components (1), two support covers (10) and one adapter (12), which second spring element has, in two-stage form, a doubled overall height with respect to the first spring element (11).

5. Spring construction element according to one of the preceding claims, **characterized in that** a fourth spring component consists of a buffer (15) which can be inserted into the installation space between a coupling web (2) and two spring bows (3) extending in one direction, and **in that** a third spring element (16) is formed from two spring construction elements (1), one or two buffers (15) and two support discs (10), which third spring element has a stiffer spring rate than the first spring element (11) with the same starting height.

6. Spring construction element according to Claim 5, **characterized in that** the buffers (15) are formed so as to be hollow and open or closed or solid from an elastic plastic material or from different plastic materials and/or other elastic materials with identical or different wall thicknesses.

7. Spring construction element according to one of the preceding claims, **characterized in that**, from a plurality thereof, the second and at least the third or fourth construction element, single- or multi-stage variations of further spring elements are produced in different heights and different spring hardnesses.

8. Spring element according to Claim 3, **characterized in that** a first spring element (11) is formed from two spring construction elements (1) and two support discs (10).

9. Spring element according to Claim 4, **characterized in that** a second spring element (14) is formed from four spring components (1), two support covers (10) and one adapter (12).

10. Spring element according to Claim 5, **characterized in that** a third spring element (16) is formed from two spring construction elements (1), one or two buffers (15) and two support discs (10).

11. Spring element according to Claim 7, **characterized in that** fourth and further spring elements are built up in multi-stage form in different heights and with different spring rates from the spring components (1;10;12;15).

12. Underspringing arrangement composed of spring elements of Claims 8, 9, 10 and/or 11 made up of construction elements according to Claims 1 to 7, **characterized in that** the underspringing arrangement is formed therefrom in different heights and/or so as to balance out different heights.

13. Underspringing arrangement according to Claim 12, **characterized in that** multi-level spring elements (11) are provided at positions of a sitting or lying surface which require soft spring compressions.

14. Underspringing arrangement according to Claim 12, **characterized in that** spring elements (16) having one or more buffers (15) are arranged at positions of a sitting or lying surface which require a hard support.

## Revendications

1. Composant à ressort en matière plastique à élasticité permanente, dans lequel il présente une entretoise de couplage plate (2) perpendiculaire à son axe central vertical (7), à partir des deux extrémités opposées de laquelle deux lames de ressort élastiques (3) s'étendent respectivement en direction opposée vers l'extérieur et retour en direction de l'axe central (7), qui sont munies à leurs extrémités d'éléments d'encliquetage (4) qui sont configurés de façon à pouvoir correspondre à des éléments d'encliquetage (5) d'autres ensembles à ressort, **caractérisé en ce que** les lames de ressort (3) sont pliées de façon concave vers l'extérieur respectivement au sommet convexe dirigé vers le côté et y forment respectivement une pince à ressort (6).

2. Composant à ressort selon l'une quelconque des revendications précédentes, **caractérisé en ce que** l'entretoise de couplage (2) présente une came d'encliquetage (8) et un logement de came (9) respectivement décalés latéralement par rapport à l'axe central (7) à travers le composant à ressort (1) et deux composants à ressort (1) sont formés de façon encliquetable l'un avec l'autre angulairement dans une position retournée de 180°, dans laquelle chaque fois une came d'encliquetage (8) d'un premier composant à ressort (1) s'engage dans le logement de came (9) de l'autre composant à ressort respectif (1).

3. Composant à ressort selon l'une quelconque des revendications précédentes, **caractérisé en ce qu'**un deuxième ensemble à ressort se compose d'un plateau d'appui (10), qui présente des éléments d'encliquetage (5) correspondant aux éléments d'encliquetage (4) du composant à ressort (1) et **en ce qu'**un premier élément à ressort séparé (11) est formé par deux composants à ressort (1) et deux plateaux d'appui (10).

4. Composant à ressort selon l'une quelconque des revendications précédentes, **caractérisé en ce qu'**un troisième ensemble à ressort se compose d'un adaptateur (12), qui présente des éléments d'encliquetage (13) correspondant aux éléments d'encliquetage (4) des composants à ressort (1), qui sont disposés de telle manière qu'ils correspondent sur deux côtés opposés de l'adaptateur (12) aux éléments d'encliquetage (4) de plusieurs composants (1) et **en ce qu'**un deuxième élément à ressort (14) est formé de quatre ensembles à ressort (1) de deux couvercles d'appui (10) et d'un adaptateur (12), et présente sur deux étages une hauteur de construction doublée par rapport au premier élément à ressort (11).

5. Composant à ressort selon l'une quelconque des revendications précédentes, **caractérisé en ce qu'**un quatrième ensemble à ressort se compose d'un tampon (15), qui peut être inséré dans l'espace de construction entre une entretoise de couplage (2) et deux lames de ressort (3) s'étendant dans une direction et **en ce qu'**un troisième élément à ressort (16) est formé de deux composants à ressort (1), d'un ou de deux tampon(s) (15) et de deux plateaux d'appui (10), et présente par rapport au premier élément à ressort (11) une raideur de ressort plus élevée pour une même hauteur initiale.

6. Composant à ressort selon la revendication 5, **caractérisé en ce que** les tampons (15) sont réalisés sous forme creuse et ouverte ou fermée ou massive en un matériau de matière plastique élastique ou en matériaux de matière plastique différents et/ou en d'autres matériaux élastiques avec des épaisseurs de paroi identiques ou différentes.

7. Composant à ressort selon l'une quelconque des revendications précédentes, **caractérisé en ce que** des variantes à un seul ou à plusieurs étage(s) d'autres éléments à ressort en différentes hauteurs et en différentes raideurs de ressort sont produites à partir de plusieurs de ce composant, du deuxième et au moins du troisième ou du quatrième composant.

8. Elément à ressort selon la revendication 3, **caractérisé en ce qu'**un premier élément à ressort (11) est formé de deux composants à ressort (1) et de deux plateaux d'appui (10).

9. Elément à ressort selon la revendication 4, **caractérisé en ce qu'**un deuxième élément à ressort (14) est formé de quatre ensembles à ressort (1), de deux couvercles d'appui (10) et d'un adaptateur (12).

10. Elément à ressort selon la revendication 5, **caractérisé en ce qu'**un troisième élément à ressort (16) est formé de deux composants à ressort (1), d'un ou de deux tampon(s) (15) et de deux plateaux d'appui (10).

11. Elément à ressort selon la revendication 7, **caractérisé en ce qu'**un quatrième et d'autres élément(s) à ressort sont construits à plusieurs étages en différentes hauteurs et avec des raideurs de ressort différentes à partir des ensembles à ressort (1; 10; 12; 15).

12. Sommier en éléments à ressort selon les revendications 8, 9, 10 et/ou 11, en composants à ressort selon les revendications 1 à 7, **caractérisé en ce que** le sommier est formé en différentes hauteurs et/ou en équilibrant différentes hauteurs à partir de ceux-ci.

13. Sommier selon la revendication 12, **caractérisé en ce qu'**il est prévu des ensembles à ressort à plusieurs étages (11) à des positions d'un siège ou d'une couche, qui nécessitent des suspensions profondes souples.

14. Sommier selon la revendication 12, **caractérisé en ce que** des éléments à ressort (16) avec un ou plusieurs tampon(s) (15) sont disposés à des positions d'un siège ou d'une couche, qui nécessitent un soutien dur.
